# EUROPEAN PATENT APPLICATION

(11) **EP 2 640 115 A1**
(43) Date of publication of application: **18.09.2013**
(21) Application number: 12360018.1
(22) Date of filing: 16.03.2012
(51) Int. Cl.: H04W 24/10

(54) **Radio coverage reporting**

(71) Applicant: Alcatel Lucent, 75007 Paris (FR)
(72) Inventor: Puddle, Nicola, Swindon, Wiltshire, SN4 0ND (GB); Brend, Graham, Bath, Somerset, BA1 7UE (GB); Lim, Seau S., Swindon, Wiltshire SN1 4GU (GB)
(74) Representative: Script IP Limited

(57) **Abstract**

A method of controlling user equipment, a network node, a method of radio coverage reporting by user equipment, user equipment and computer program products are disclosed. The method of controlling user equipment comprises the step of: receiving an indicator from the user equipment that the user equipment is executing an application which functions to provide location information for the user equipment from a non-wireless telecommunications network, the indicator providing an indication that the application is likely to be executing for greater than a defined period of time. In this way, the network can not only determine which user equipment are able to provide detailed or accurate location information, but is also to able to determine which user equipment are likely to be able to continue to have such detailed location information available in order to be able to provide detailed location information associated with the radio condition measurements for a sufficiently long period of time. Providing the indicator enables the network to determine the user equipment to instruct to perform radio coverage reporting which have the greatest likelihood, probability of confidence level of providing accurate location information with the radio coverage measurements.

## Description

### FIELD OF THE INVENTION

The present invention relates to a method of controlling user equipment, a network node, a method of radio coverage reporting by user equipment, user equipment and computer program products.

### BACKGROUND

Wireless telecommunication systems are known. In such systems, user equipment (for example, mobile communication devices or mobile telephones) are operable to communicate with base stations or other network nodes provided by network providers. Radio coverage is provided to the user equipment by base stations or the other network nodes. When deploying the wireless telecommunications network, the operator typically wishes to ensure that its deployed base stations or other network nodes provide sufficient coverage to its subscribers when using their user equipment, whilst also avoiding a situation where the coverage areas overlap too much since this is a waste of resources. Reaching this balance often requires a significant amount of testing and adjustment of the various radio parameters in order to determine the coverage at different locations in the network.

Although various techniques exist for determining the coverage provided to mobile devices at different locations in the network through radio coverage reporting, they each have their own shortfalls.

Accordingly, it is desired to provide an improved technique for radio coverage reporting.

### SUMMARY

According to a first aspect, there is provided a method of controlling user equipment of a wireless telecommunications network for radio coverage reporting, the method comprising the step of: receiving an indicator from the user equipment that the user equipment is executing an application which functions to provide location information for the user equipment from a non-wireless telecommunications network, the indicator providing an indication that the application is likely to be executing for greater than a defined period of time.

The first aspect recognizes that a problem with existing techniques for radio coverage reporting is that either dedicated resources are required to be deployed by the network operator to measure coverage in different areas or, if the functionality of deployed user equipment is utilized to perform this activity, then duplicated or insufficiently accurate coverage information may be provided. In particular, network operators have often been required to perform drive tests whereby dedicated test user equipment are driven around the network to monitor and report on the measured radio conditions which is correlated with accurate or detailed location information derived from a separate location positioning system. This can prove costly to the operator, both in financial terms as well as in the time required to complete such testing. Functionality has been provided in recent user equipment known as "minimisation of drive test" (MDT) where subscribers' user equipment itself is used to monitor and report on the measured radio conditions which is correlated with location information derivable by the user equipment. Although this helps to reduce the need for network operators to perform such drive testing, the measurements provided by the user equipment often duplicates existing measurements and may not provide sufficiently accurate or detailed location information. Typically, the user equipment is configured to perform such MDT measurements so that when the user equipment is in an idle mode (or in Cell Paging channel (Cell_PCH) or Universal Terrestrial Radio Access Network Registration Area Paging channel (URA_PCH) states for Universal Mobile Telecommunications System (UMTS)) it logs information about the surrounding radio conditions, together with its location when taking those measurements. The measurements normally occur at varying points as the user equipment transits around the network. When the user equipment then attaches to a cell, the user equipment reports that it has an MDT log and, upon request from the network, will report the log to the network.

The first aspect also recognizes that some user equipment have additional functionality which enables it to obtain accurate or detailed location information from a separate location positioning system which may be running as part of a location session initiated by an application executing on the user equipment. This accurate or detailed location information may be used to determine the user equipment's position when measuring radio conditions. Also, the first aspect recognises that whilst the fact that the user equipment is executing an application which has a location session providing accurate or detailed location information may be signalled to the network, the network may still select user equipment to perform measurements which still does not provide sufficiently accurate location information.

Accordingly, a method of controlling user equipment for performing radio coverage reporting is provided. The method may comprise the step of receiving an indicator from user equipment. The indicator may indicate that the user equipment is executing an application which provides location information relating to the user equipment. The location information provided by the application may come from a network other than the wireless telecommunications network. The indicator provided by the user equipment may indicate that the application which is providing the location information is likely to be executing for more than an amount of time or executing for a reasonable or predetermined period.

In this way, the network can not only determine which user equipment are able to provide detailed or accurate location information, but is also to able to determine which user equipment are likely to be able to continue to have such detailed location information available in order to be able to provide detailed location information associated with the radio condition measurements for a sufficiently long period of time. This is because some applications may utilise a location session for the entire duration of this execution, whilst other applications may not utilise a location session at all or only utilise location sessions intermittently. Also, some applications which utilise a location session may only be executed for a relatively short period of time. Providing the indicator enables the network to determine the user equipment to instruct to perform radio coverage reporting which have the greatest likelihood, probability or confidence level of providing accurate location information with the radio coverage measurements. This is because only those user equipment which are executing an application which they consider is likely to have a location session running for more than a desired amount of time provide an indicator to the network. This reduces the probability of radio coverage reports being provided by those user equipment which are unlikely to maintain a location session to provide detailed location information which would in turn provide little or no detailed location information which unnecessarily wastes the resources in the user equipment used to collect that information, the resources used to transmit that information across the network and the resources used by the network when processing such redundant information. Using this approach, the network has increased confidence that a location session is likely to last for a period of time sufficient for the user equipment to perform the required MDT logging (which is configurable from around 10 minutes to around two hours). Also, the network can utilize location information from the user equipment for immediate MDT if, for example, the user equipment is performing secure user plane location (SUPL). When using a secure user plane location method, the network is unaware that this location method is being utilized by the user equipment as it does not use the network to user equipment control plane. However, providing the indication to the network signals that a location session is likely to be underway for sufficient time to enable accurate location information to be provided with the radio coverage measurements.

In one embodiment, the non-wireless telecommunications network comprises a position locating network and the application provides the location information from signals received from the position locating network. Accordingly, a separate position locating network may be used by the user equipment to derive its location. It will be appreciated that such a dedicated location positioning network is likely to provide highly accurate position information.

In one embodiment, the application provides the location information from signals received from a satellite-based position locating network.

In one embodiment, the location information comprises location coordinates of the user equipment. Accordingly, the location information may comprise at least location coordinates of the user equipment. It will be appreciated that typically such position locating networks will also provide other information such as a degree of certainty associated with those location coordinates.

In one embodiment, the indication indicates that an execution period for the application is likely to exceed a threshold period of time. Accordingly, the user equipment may only provide an indication if it is estimated that the execution period of the application is likely to be longer than a particular period of time. Again, this helps to reduce the traffic over the network and only provides indicators to the network when it is expected that the application is likely to be executed for a suitable amount of time to enable sufficient radio coverage measurements to be made.

In one embodiment, the indication indicates a likely execution period for the application. Accordingly, the indication may also indicate the likely or expected period of time that the application will be executed. Again, this provides additional information to the network to help prioritize those user equipment which are most likely to be able to obtain detailed location information for the longest period of time over those that may not.

In one embodiment, the method comprises the step of transmitting a request to user equipment to provide the indicator. Accordingly, the indicators may only be provided to the network when requested. Again, this helps to minimize the traffic across the network.

In one embodiment, the method comprises the step of transmitting a request to user equipment within an area of the wireless telecommunication network to provide the indicator. Accordingly, only those user equipment within a particular area or areas of the network may be requested to provide the indicators. Again this helps to minimize the traffic across the network and ensures that only user equipment within areas of interest to the network respond.

In one embodiment, the method comprises the step of transmitting information to user equipment indicating the defined period of time. Accordingly, the network may decide what is a suitable threshold period of time and transmit this to the user equipment. It will be appreciated that this enables the network to vary the threshold, which may increase or decrease the number of user equipment providing an indicator to control the amount of traffic and resourced used to generate, propagate and process the indicators.

In one embodiment, the method comprises the step of transmitting an instruction to user equipment providing the indicator to perform radio coverage measurements correlated with the location information. Accordingly, the network may instruct particular user equipment to perform radio coverage measurements correlated with the location information. Hence, specific user equipment may be instructed to perform such radio coverage measurements.

In one embodiment, the method comprises the step of transmitting an instruction to at least those user equipment whose indicator indicates that the execution period for its application is likely to exceed a minimum period of time. Accordingly, only those user equipment which are likely to have detailed location information for a sufficiently long period of time are instructed to perform radio coverage measurements. Again, this reduces the probability of insufficiently accurate radio coverage reports being provided.

In one embodiment, the method comprises the step of transmitting the instruction to user equipment within an area of the wireless telecommunication network. Accordingly, only those user equipment within a specified area or areas of the network may be instructed to perform radio coverage measurements.

In one embodiment, the method comprises the step of transmitting the instruction to user equipment to perform radio coverage measurements correlated with the location information when within an area of the wireless telecommunication network. Accordingly, user equipment may be provisioned such that when they enter particular areas of the network they should perform radio coverage measurements.

According to a second aspect, there is provided a network node operable to control user equipment of a wireless telecommunications network for radio coverage reporting, the network node comprising: reception logic operable to receive an indicator from the user equipment that the user equipment is executing an application which functions to provide location information for the user equipment from a non-wireless telecommunications network, the indicator providing an indication that the application is likely to be executing for greater than a defined period of time.

In one embodiment, the non-wireless telecommunications network comprises a position locating network and the application provides the location information from signals received from the position locating network.

In one embodiment, the application provides the location information from signals received from a satellite-based position locating network.

In one embodiment, the location information comprises location coordinates of the user equipment.

In one embodiment, the indication indicates that an execution period for the application is likely to exceed a threshold period of time.

In one embodiment, the indication indicates a likely execution period for the application.

In one embodiment, the network node comprises transmission logic operable to transmit a request to user equipment to provide the indicator.

In one embodiment, the network node comprises transmission logic operable to transmit a request to user equipment within an area of the wireless telecommunication network to provide the indicator.

In one embodiment, the network node comprises transmission logic operable to transmit information to user equipment indicating the defined period of time.

In one embodiment, the network node comprises transmission logic operable to transmit an instruction to user equipment providing the indicator to perform radio coverage measurements correlated with the location information.

In one embodiment, the network node comprises transmission logic operable to transmit an instruction to at least those user equipment whose indicator indicates that the execution period for its application is likely to exceed a minimum period of time.

In one embodiment, the transmission logic is operable to transmit the instruction to user equipment within an area of the wireless telecommunication network.

In one embodiment, the transmission logic is operable to transmit the instruction to user equipment to perform radio coverage measurements correlated with the location information when within an area of the wireless telecommunication network.

According to a third aspect, there is provided a method of radio coverage reporting by user equipment of a wireless telecommunications network, the method comprising the step of: transmitting an indicator from the user equipment that the user equipment is executing an application which functions to provide location information for the user equipment from a non-wireless telecommunications network, the indicator providing an indication that the application is likely to be executing for greater than a defined period of time.

In one embodiment, the non-wireless telecommunications network comprises a position locating network and the application provides the location information from signals received from the position locating network.

In one embodiment, the application provides the location information from signals received from a satellite-based position locating network.

In one embodiment, the location information comprises location coordinates of the user equipment.

In one embodiment, the indication indicates that an execution period for the application is likely to exceed a threshold period of time.

In one embodiment, the indication indicates a likely execution period for the application.

In one embodiment, the method comprises the step of determining the likely execution period from information provided with the application. Accordingly, the likely execution period for the application may be provided in information which comes with the application itself.

In one embodiment, the method comprises the step of determining the likely execution period from historic execution period information determined from previous execution of the application. Accordingly, the user equipment itself may monitor the execution periods of each application and use that information to determine the likely period of time that detailed location information is provided during the execution of the application.

In one embodiment, the method comprises the step of receiving a request from a network node to provide the indicator.

In one embodiment, the method comprises the step of receiving information from a network node indicating the defined period of time.

In one embodiment, the method comprises the step of receiving an instruction from a network node to perform radio coverage measurements correlated with the location information.

In one embodiment, the method comprises the step of receiving an instruction from a network node to perform radio coverage measurements correlated with the location information when within an area of the wireless telecommunication network.

According to a fourth aspect, there is provided user equipment of a wireless telecommunications network operable to report radio coverage, the user equipment comprising: transmission logic operable to transmit an indicator that the user equipment is executing an application which functions to provide location information for the user equipment from a non-wireless telecommunications network, the indicator providing an indication that the application is likely to be executing for greater than a defined period of time.

In one embodiment, the non-wireless telecommunications network comprises a position locating network and the application provides the location information from signals received from the position locating network.

In one embodiment, the application provides the location information from signals received from a satellite-based position locating network.

In one embodiment, the location information comprises location coordinates of the user equipment.

In one embodiment, the indication indicates that an execution period for the application is likely to exceed a threshold period of time.

In one embodiment, the indication indicates a likely execution period for the application.

In one embodiment, the user equipment comprises determining logic operable to determine the likely execution period from information provided with the application.

In one embodiment, the user equipment comprises determining logic operable to determine the likely execution period from historic execution period information determined from previous execution of the application.

In one embodiment, the user equipment comprises reception logic operable to receive a request from a network node to provide the indicator.

In one embodiment, the user equipment comprises reception logic operable to receive information from a network node indicating the defined period of time.

In one embodiment, the user equipment comprises reception logic operable to receive an instruction from a network node to perform radio coverage measurements correlated with the location information.

In one embodiment, the user equipment comprises reception logic operable to receive an instruction from a network node to perform radio coverage measurements correlated with the location information when within an area of the wireless telecommunication network.

According to a fifth aspect, there is provided a computer program product operable, when executed on a computer, to perform the method steps of the first or third aspect. Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

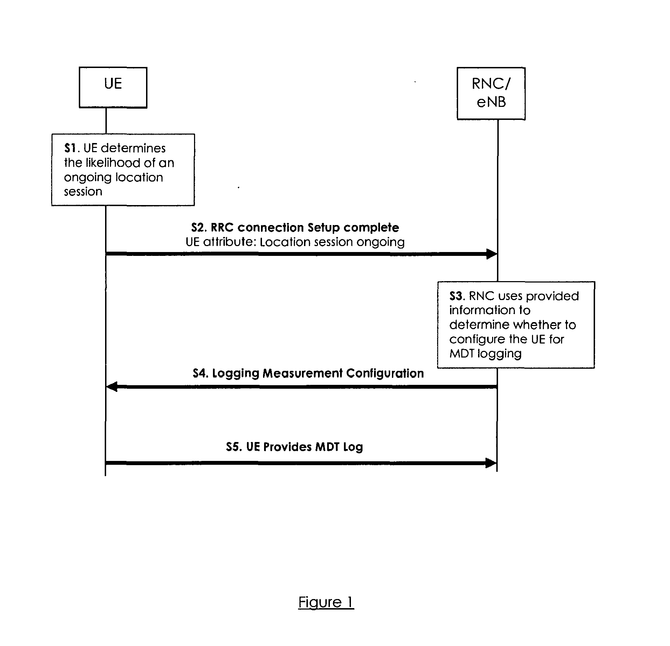

Figure 1 illustrates the main processing steps occurring within the wireless telecommunications network according to one embodiment.

### DESCRIPTION OF THE EMBODIMENTS

### Overview

Before discussing the embodiments in any more detail, first an overview will be provided. As mentioned above, in order to provide information on radio coverage, user equipment may be configured to perform Minimisation of Drive Test [MDT] measurements where user equipment measures radio coverage provided by base stations in its vicinity, which may then be reported to the network. Typically, the user equipment measures the strength of pilot signals receivable by the user equipment, together with other information identifying the base station.

The degree to which those measurements can be correlated with a location depends on the capabilities of the user equipment. Previously, the accuracy of the location information was very low and was dependent upon correlating received signals, their strength and performing triangulation to estimate a location. The accuracy of the location information has improved with the advent of user equipment which are able to obtain so-called "detailed location information" using, for example, location positioning networks such as the global positioning system (GPS).

However, the MDT measurements provided by user equipment may still be insufficiently accurate if measurements are provided by user equipment without the ability to provide such detailed location information, or where the detailed location information was not available for all or most of the time when MDT measurements were being made. This can lead to the propagation of insufficiently accurate MDT information which provides little value to the network and consumes resources in its determination, transmission and processing.

Accordingly, a technique is provided whereby an assessment is made of the probability or confidence level that a function or capability of the user equipment to perform a so-called "location session" which provides detailed location information relating to the location of the user equipment will remain active for a sufficient time period within which MDT information can be measured. Hence, the user equipment indicates to the network that it has an active location session and also indicates whether that location session is likely to last for a particular period of time. This indicator can be used by the network to determine which user equipment are more likely to give detailed location information or location accurate MDT information which is most useful to the network. The network may then provision those user equipment to perform MDT measurements and provide their MDT information. This helps to increase the probability that the resources allocated to collecting, transmitting and processing the MDT information are most effectively and efficiently used. MDT can be configured to be performed only in specific areas and/or the network can request the user equipment to only provide the location session indication when in a specified area of the network.

Figure 1 illustrates the main processing steps occurring within the wireless telecommunications network according to one embodiment.

### Application Period Determination

At step S 1, the user equipment determines the likelihood of an ongoing location session. Due to the nature of, for example, smartphone applications, it is likely that different applications require a location determination session to be active for varying periods of time. For example, one application may need GPS to be running for a reasonably long amount of time, another application may only require GPS to be running for a short period of time, whilst other applications may not need GPS to be running at all. In particular, a typical satellite navigation application is likely to be running for a long period of time (such as the duration of the car journey) and other applications may only have GPS running for a short period of time (such as a restaurant finder).

Accordingly, the user equipment utilizes information associated with the type of application to determine how likely it is that they location session will be active for a reasonable time period. Such a determination by the user equipment will typically take into account the type of application currently running and one approach is to configure the user equipment with information related to the application that allows the user equipment to make this determination. For example, when an application that requires location information is downloaded or installed on the user equipment, the information provided to the user equipment during the download and installation process may include an indication of whether a location session providing the necessary location information is required for the full duration of execution of the application or whether it is required for just one part of the duration of the application's execution. The user equipment can then use this information to calculate a probability, likelihood or confidence level that the associated location session will be maintained for a reasonable amount of time that may be required to perform MDT measurements. In particular, an assessment can be made using this information of the probability that the location session will continue for sufficient time following a time when the user equipment reports to the network that it has such a session active. Hence, the user equipment determines the type of application using an active location session and therefore the likelihood of the location session being long-running.

Alternatively or additionally, the user equipment may monitor the actual location session length associated with each application being run by the user equipment and may generate its own probability, likelihood or confidence level or modify a previous probability, likelihood or confidence level based on actual location session length experienced by the user equipment.

Information may be provided by the network to the user equipment requesting that all user equipment within the network provide an indication to the network when activating a location session. Alternatively or additionally, the network may provide this to only user equipment within particular areas of the network. Alternatively or additionally the network may require that only user equipment that has a probability, likelihood or confidence level associated with an application being executed which exceeds a value specified by the network to provide an indicator to the network that a likely suitable location session has been activated or is ongoing.

### Indicator Reporting

At step S2, the user equipment reports its actual probability, likelihood or confidence level that a location session will be active for a suitable period of time to the network. Alternatively, the user equipment provides a simple indication to the network indicating that it has determined that the location session is likely to be sufficiently long running. Such an indication would be sent by the user equipment if it calculates that the probability that the location session will continue for a sufficient period of time which is above a pre-configured threshold provided typically by the network. Using a threshold allows the network to increase or decrease the number of user equipment that are likely to be selected to perform MDT logging, based on the needs of the operators to be provided with MDT logs. As mentioned above, the user equipment may only provide this indication if the network broadcasts that it is required. This again helps to reduce any unnecessary signalling from the user equipment.

MDT can be configured to be performed only in specific areas (such as a location area, routing area or tracking area or list of cell IDs) and the network could choose to broadcast that a location session indication is required from user equipment only in a specific area of the network. In addition, the network can through dedicated messages to the user equipment, request the user equipment to only provide the location session indication when in a specified area of the network.

In addition, the user equipment may provide the location session indication upon request from the network, thereby allowing the network to have the most recent information from user equipment and to ensure that any location session is still ongoing prior to configuring the user equipment for MDT.

Accordingly, as can be seen in Figure 1, during the radio resource connection [RRC] establishment procedure, the user equipment sends, together with its capabilities, the indication of the likelihood of the location session being one that would be ongoing for a sufficient period of time.

### User Equipment Selection

At step S3, the network chooses which user equipment to configure (and therefore perform logging) for MDT. The base station or radio network controller takes account of the reported location session indications. From this, the network can then either select all or a subset of the user equipment to perform MDT measurements. For example, the network may decide to configure all the user equipment exceeding a threshold to perform such MDT measurements. Additionally or alternatively, the network may decide to configure only a predetermined number of those user equipment reporting the highest probability, likelihood or confidence level of an ongoing location session being maintained for the duration of the MDT measurements. Likewise, the network may decide to configure only those user equipment within specific areas of the network or when moving into those specific areas of the network to perform such MDT measurements. Accordingly, the network uses the reported confidence level to determine whether the user equipment is a suitable candidate to initiate a request for MDT logging or not. Hence it can be seen that when choosing user equipment to configure (and therefore perform logging) for MDT, the base station or RNC takes account of the reported location session indication.

### Logging Measurements Configuration

At step S4, the network sends a logging measurement configuration message to the user equipment to request that it performs logging MDT when in the idle or PCH states.

### MDT Log Transmission

At step S5, when the MDT measurements are complete, the user equipment transmits to the network the logged measurement information, together with the detailed location information, which may be in the form of GPS or other location system information detailing the location of the user equipment when the measurements were made. It will be appreciated that should be location session still be terminated during the MDT logging, the user equipment may be configured to either discard the complete MDT log or to continue logging and to provide the logged measurements with the location information it has available to it. The network may then choose to either utilize that MDT log or disregard some or all of the measurement information.

It will be appreciated that the MDT log will typically contain measurement information indicating the strength of signals received by the user equipment from base stations, correlated with the location of the user equipment when those measurements were made.

Hence it can be seen that this approach introduces a method to provide the network with a deterministic indicator of whether a user equipment location session is ongoing, or is likely to be ongoing for a period of time. Hence, if user equipment indicates to the network that it has an active location session, this information can also contain an indication that the location session is to last sufficiently long enough to the user equipment to be able to perform, at least part of, an MDT logging session. This approach provides useful information to the network in order that it may then choose appropriate user equipment for performing logged MDT. This differs to currently proposed techniques where the network is not aware of whether the location session is likely to be ongoing in the user equipment and hence whether the user equipment is a suitable candidate to configure for MDT logging or not.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling user equipment of a wireless telecommunications network for radio coverage reporting, said method comprising the step of:
receiving an indicator from said user equipment that said user equipment is executing an application which functions to provide location information for said user equipment from a non-wireless telecommunications network, said indicator providing an indication that said application is likely to be executing for greater than a defined period of time.

2. The method of claim 1, wherein said non-wireless telecommunications network comprises a position locating network and said application provides said location information from signals received from said position locating network.

3. The method of claim 1 or 2, wherein said location information comprises location coordinates of said user equipment.

4. The method of any preceding claim, wherein said indication indicates that an execution period for said application is likely to exceed a threshold period of time.

5. The method of any preceding claim, wherein said indication indicates a likely execution period for said application.

6. The method of any preceding claim, comprising the step of transmitting a request to user equipment to provide said indicator.

7. The method of any preceding claim, comprising the step of transmitting a request to user equipment within an area of said wireless telecommunication network to provide said indicator.

8. The method of any preceding claim, comprising the step of transmitting information to user equipment indicating said defined period of time.

9. The method of any preceding claim, comprising the step of transmitting an instruction to user equipment providing said indicator to perform radio coverage measurements correlated with said location information.

10. The method of any preceding claim, comprising the step of transmitting an instruction to at least those user equipment whose indicator indicates that said execution period for its application is likely to exceed a minimum period of time.

11. The method of any preceding claim, comprising the step of transmitting said instruction to user equipment within an area of said wireless telecommunication network.

12. The method of any preceding claim, comprising the step of transmitting said instruction to user equipment to perform radio coverage measurements correlated with said location information when within an area of said wireless telecommunication network.

13. A network node operable to control user equipment of a wireless telecommunications network for radio coverage reporting, said network node comprising:
reception logic operable to receive an indicator from said user equipment that said user equipment is executing an application which functions to provide location information for said user equipment from a non-wireless telecommunications network, said indicator providing an indication that said application is likely to be executing for greater than a defined period of time.

14. A method of radio coverage reporting by user equipment of a wireless telecommunications network, said method comprising the step of:
transmitting an indicator from said user equipment that said user equipment is executing an application which functions to provide location information for said user equipment from a non-wireless telecommunications network, said indicator providing an indication that said application is likely to be executing for greater than a defined period of time.

15. User equipment of a wireless telecommunications network operable to report radio coverage, said user equipment comprising:
transmission logic operable to transmit an indicator that said user equipment is executing an application which functions to provide location information for said user equipment from a non-wireless telecommunications network, said indicator providing an indication that said application is likely to be executing for greater than a defined period of time.

## Amended claims

### Amended claims in accordance with Rule 137(2) EPC.

**1.** A method of controlling user equipment of a wireless telecommunications network for radio coverage reporting, said method comprising the step of:
receiving (S2) an indicator from said user equipment that said user equipment is executing an application which functions to provide location information for said user equipment from a non-wireless telecommunications network, said indicator providing an indication that said application is likely to be executing for greater than a defined period of time; and
transmitting (S4) an instruction to user equipment providing said indicator to perform radio coverage measurements correlated with said location information.

**2.** The method of claim 1, wherein said non-wireless telecommunications network comprises a position locating network and said application provides said location information from signals received from said position locating network.

**3.** The method of claim 1 or 2, wherein said location information comprises location coordinates of said user equipment.

**4.** The method of any preceding claim, wherein said indication indicates that an execution period for said application is likely to exceed a threshold period of time.

**5.** The method of any preceding claim, wherein said indication indicates a likely execution period for said application.

**6.** The method of any preceding claim, comprising the step of transmitting a request to user equipment to provide said indicator.

**7.** The method of any preceding claim, comprising the step of transmitting a request to user equipment within an area of said wireless telecommunication network to provide said indicator.

**8.** The method of any preceding claim, comprising the step of transmitting information to user equipment indicating said defined period of time.

**9.** The method of any preceding claim, comprising the step of transmitting said instruction to at least those user equipment whose indicator indicates that said execution period for its application is likely to exceed a minimum period of time.

**10.** The method of any preceding claim, comprising the step of transmitting said instruction to user equipment within an area of said wireless telecommunication network.

**11.** The method of any preceding claim, comprising the step of transmitting said instruction to user equipment to perform radio coverage measurements correlated with said location information when within an area of said wireless telecommunication network.

**12.** A network node operable to control user equipment of a wireless telecommunications network for radio coverage reporting, said network node comprising:
reception logic operable to receive an indicator from said user equipment that said user equipment is executing an application which functions to provide location information for said user equipment from a non-wireless telecommunications network, said indicator providing an indication that said application is likely to be executing for greater than a defined period of time; and
transmission logic operable to transmit an instruction to user equipment providing the indicator to perform radio coverage measurements correlated with the location information.

**13.** A method of radio coverage reporting by user equipment of a wireless telecommunications network, said method comprising the step of:
transmitting (S2) an indicator from said user equipment that said user equipment is executing an application which functions to provide location information for said user equipment from a non-wireless telecommunications network, said indicator providing an indication that said application is likely to be executing for greater than a defined period of time; and
receiving an instruction from a network node to perform radio coverage measurements correlated with the location information.

**14.** User equipment of a wireless telecommunications network operable to report radio coverage, said user equipment comprising:
transmission logic operable to transmit an indicator that said user equipment is executing an application which functions to provide location information for said user equipment from a non-wireless telecommunications network, said indicator providing an indication that said application is likely to be executing for greater than a defined period of time; and
reception logic operable to receive an instruction from a network node to perform radio coverage measurements correlated with the location information.

**15.** A computer program product operable, when executed on a computer, to perform the method steps of any one of claims 1 to 11 or 13.
